# EUROPÄISCHE PATENTANMELDUNG

(11) **EP 4 582 313 A1**
(43) Veröffentlichungstag der Anmeldung: **09.07.2025**
(21) Anmeldenummer: 24220535.9
(22) Anmeldetag: 17.12.2024
(51) Int. Cl.: B60R 13/04

(54) **AUSSENVERKLEIDUNGSTEIL FÜR EIN KRAFTFAHRZEUG**

(30) Priorität: 28.12.2023 DE 202023107681 U
(71) Anmelder: REHAU Automotive SE & Co. KG, 95111 Rehau (DE)
(72) Erfinder: Mößner, Quirin, 91722 Arberg (DE); Ruder, Jürgen, 85092 Kösching (DE); Schneider, Tom, 08529 Plauen (DE)

(57) **Zusammenfassung**

Die Erfindung betrifft ein Außenverkleidungsteil für ein Kraftfahrzeug, mit einem dünnwandigen Außenanbauteil (1), und wenigstens einem, von dem Außenanbauteil (1) abstehenden Funktionselement (2), wobei das Funktionselement (2) und das Außenanbauteil (1) einstückig aus einem Kunststoffmaterial ausgebildet sind und, wobei eine linienförmige Einschnürung (3) am Übergang von dem Außenanbauteil (1) zu dem Funktionselement (2) vorgesehen ist, um Einfallstellen und Abzeichnungen auf der Oberfläche des Außenanbauteils (1) aufgrund einer Masseanhäufung des Kunststoffmaterials des Außenanbauteils (1) zu vermeiden, wobei zumindest abschnittsweise und mit einem geringen Abstand zu der Einschnürung (3) eine annähernd parallel zu der Einschnürung (3) verlaufende Sicke (4) oder eine weitere Einschnürung in dem Funktionselement (2) vorgesehen ist.

## Beschreibung

Die vorliegende Erfindung betrifft ein Außenverkleidungsteil für ein Kraftfahrzeug, mit einem dünnwandigen Außenanbauteil, und wenigstens einem, von dem Außenanbauteil abstehenden Funktionselement, wobei das Funktionselement und das Außenanbauteil einstückig aus einem Kunststoffmaterial ausgebildet sind und, wobei eine linienförmige Einschnürung am Übergang von dem Außenanbauteil zu dem Funktionselement vorgesehen ist, um Einfallstellen und Abzeichnungen auf der Oberfläche des Außenanbauteils aufgrund einer Masseanhäufung des Kunststoffmaterials des Außenanbauteils zu vermeiden.

Nachteilig an einem derartigen Außenverkleidungsteil ist jedoch, dass trotz der oben beschriebenen Maßnahmen nach dem Stand der Technik, Einfallstellen und Abzeichnungen oft nicht ganz vermeiden lassen, weil beispielsweise das Funktionselement aus Spritzgusswerkzeugtechnischen Gründen und/oder aus Gründen der Montagemöglichkeiten mit anderen Bauteilen, nicht abgeknickt und die Einfallstelle in Folge nicht in einem Designknick versteckt werden kann. Oder die Geometrien auf dem Funktionselement, wie beispielsweise Befestigungslöcher oder Rasthaken, welche die Abzeichnungen mit verursachen, aus diversen Gründen nahe der Sichtflächen des Außenverkleidungsteils eingebracht werden müssen.

Aufgabe der vorliegenden Erfindung ist es daher ein Außenanbauteil für ein Fahrzeug anzugeben, dass bei größerer Designfreiheit bei der Gestaltung des Außenverkleidungsteils weniger Einfallstellen oder Abzeichnungen aufweist.

Diese Aufgabe wird vorliegend gelöst durch ein Außenverkleidungsteil für ein Kraftfahrzeug, mit
- einem dünnwandigen Außenanbauteil, und
- wenigstens einem, von dem Außenanbauteil abstehenden Funktionselement,

wobei das Funktionselement und das Außenanbauteil einstückig aus einem Kunststoffmaterial ausgebildet sind und,
wobei eine linienförmige Einschnürung am Übergang von dem Außenanbauteil zu dem Funktionselement vorgesehen ist, um Einfallstellen und Abzeichnungen auf der Oberfläche des Außenanbauteils aufgrund einer Masseanhäufung des Kunststoffmaterials des Außenanbauteils zu vermeiden,
wobei zumindest abschnittsweise und mit einem geringen Abstand zu der Einschnürung eine annähernd parallel zu der Einschnürung verlaufende Sicke oder eine weitere Einschnürung in dem Funktionselement vorgesehen ist.

Durch die zusätzliche Einschnürung oder die zusätzliche Sicke in dem Funktionselement, welche zumindest abschnittsweise und mit geringem Abstand parallel bzw. linear zum Fuß oder zum Übergang des Funktionselements zu dem Außenanbauteil verläuft, werden die Abzeichnungen oder Einfallstellen aufgrund von zum Beispiel Rasthaken, Durchbrüchen oder Kontursprünge innerhalb des Funktionselements auf der Sichtseite des Außenanbauteils vermieden bzw. reduziert.

Die geringste Wandstärke des Funktionselements kann bevorzugt im Bereich der weiteren Einschnürung oder im Bereich der Sicke wenigstens 30% geringer sein als die an diesen Bereich angrenzende Wandstärke des Funktionselements. Insbesondere kann die geringste Wandstärke des Funktionselements im Bereich der weiteren Einschnürung oder im Bereich der Sicke wenigstens 50% geringer sein als die an diesen Bereich angrenzende Wandstärke des Funktionselements.

In einer Variante der Erfindung kann das Funktionselement eine Versteifungsrippe oder ein Flansch oder ein Verbindungselement, insbesondere ein Rastelement sein. Der Abstand zwischen der weiteren Einschnürung und der Einschnürung oder zwischen der Sicke und der Einschnürung kann vorzugsweise zwischen 1 mm bis 15 mm, bevorzugt zwischen 1,5 mm bis 10 mm, weiter bevorzugt zwischen 2 mm bis 8 mm betragen.

Das Kunststoffmaterial, aus dem das Funktionselement und das Außenanbauteil gebildet sind, kann bevorzugt Polypropylen umfassen. Dem Polypropylen können Verstärkungsfasern (z.B. Glasfasern) oder Verstärkungspartikel (z.B. Talkum) zugegeben sein.

Das Außenanbauteil weist bevorzugt eine Wandstärke im Bereich von 2,0 mm bis 4,0 mm, vorzugsweise von 2,5 mm bis 3,5 mm, weiter bevorzugt von 2,8 mm bis 3,2 mm auf.

Das Außenverkleidungsteil kann bevorzugt eine Stoßfängerverkleidung oder eine Türaußenverkleidung oder eine Heckklappenaußenverkleidung oder eine Kotflügelverkleidung oder eine Frontmaske oder eine Kühlerverkleidung oder eine Schwellerverkleidung oder ein Spoiler oder ein Diffusor sein.

Eine Frontmaske ist derjenige Teil eines Fahrzeugs an deren Stelle sich bei Verbrennungsfahrzeugen der Kühlergrill befunden hat. Insbesondere bei Elektrofahrzeugen ist diese Frontmaske nicht mehr als Lufteinlass zu dem Kühler (den es hier nicht mehr gibt) ausgebildet, sondern als Designelement in der Fahrzeugmitte vorgesehen.

### Ausführungsbeispiele

Im Folgenden wird die Erfindung anhand lediglich Ausführungsbeispiele darstellender Zeichnungen erläutert. Es zeigen schematisch:
- Fig. 1: eine teilweise im Querschnitt dargestellte Rückansicht eines Außenverkleidungsteils für ein Fahrzeug;
- Fig. 2: eine Detailansicht aus Fig. 1 in einer hierzu gedrehten Perspektive;
- Fig. 3: eine teilweise im Querschnitt dargestellte Rückansicht eines weiteren Außenverkleidungsteils für ein Fahrzeug.

In den Figuren werden gleiche oder funktionsgleiche Elemente mit den gleichen Bezugszeichen versehen.

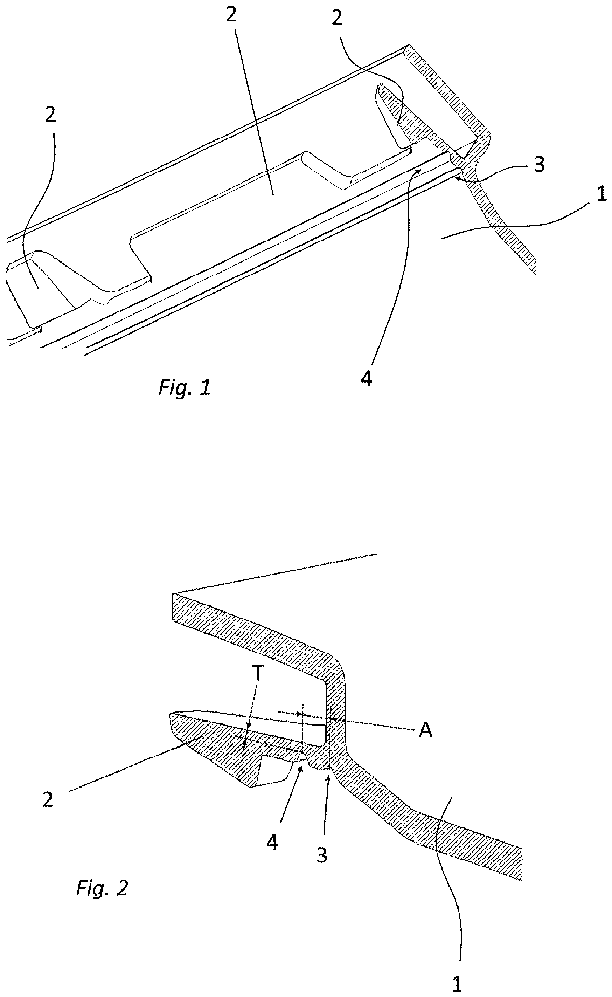

In der Fig. 1 und Fig. 2 ist ein Außenverkleidungsteil für ein Kraftfahrzeug, mit einem dünnwandigen Außenanbauteil 1, und wenigstens einem, von dem Außenanbauteil 1 abstehenden Funktionselement 2 dargestellt. Das Funktionselement 2 und das Außenanbauteil 1 sind (wie an dem teilweisen Querschnitt ersichtlich) einstückig aus einem Kunststoffmaterial ausgebildet. Die Herstellung des Außenverkleidungsteil erfolgt im Spritzguss.

Eine linienförmige Einschnürung 3 ist am Übergang von dem Außenanbauteil 1 zu dem Funktionselement 2 vorgesehen, um Einfallstellen und Abzeichnungen auf der Oberfläche des Außenanbauteils 1 aufgrund einer Masseanhäufung des Kunststoffmaterials des Außenanbauteils 1 zu vermeiden.

Zumindest abschnittsweise und mit einem geringen Abstand zu der Einschnürung 3 ist eine annähernd parallel zu der Einschnürung 3 verlaufende Sicke 4 (alternativ eine weitere Einschnürung) in dem Funktionselement 2 vorgesehen.

In Fig. 2 ist dargestellt, dass die geringste Wandstärke T des Funktionselements 2 im Bereich der weiteren Einschnürung oder im Bereich der Sicke 4 wenigstens 30%, bevorzugt wenigstens 50% geringer ist als die an diesen Bereich angrenzende Wandstärke des Funktionselements 2. Einen Wert von mehr als 85% sollte diese Wandstärke T jedoch nicht unterschreiten.

Ebenfalls in Fig. 2 ersichtlich beträgt der Abstand A zwischen der Sicke 4 und der Einschnürung 3 zwischen 1 mm bis 15 mm, bevorzugt zwischen 1,5 mm bis 10 mm, weiter bevorzugt zwischen 2 mm bis 8 mm.

Die hier dargestellten Funktionselemente (vgl. Fig. 1) sind eine Versteifungsrippe und Verbindungselemente in Form von Rastelementen mit Rasthaken.

Das Kunststoffmaterial, aus dem das Außenanbauteil und das Funktionselement gebildet sind, umfasst bevorzugt Polypropylen.

Das Außenanbauteil 1 weist eine Wandstärke im Bereich von 2,0 mm bis 4,0 mm, vorzugsweise von 2,5 mm bis 3,5 mm, bevorzugt von 2,8 mm bis 3,2 mm auf.

Das gezeigte Außenverkleidungsteil kann eine Stoßfängerverkleidung oder eine Türaußenverkleidung oder eine Heckklappenaußenverkleidung oder eine Kotflügelverkleidung oder eine Frontmaske oder eine Kühlerverkleidung oder eine Schwellerverkleidung oder ein Spoiler oder ein Diffusor sein.

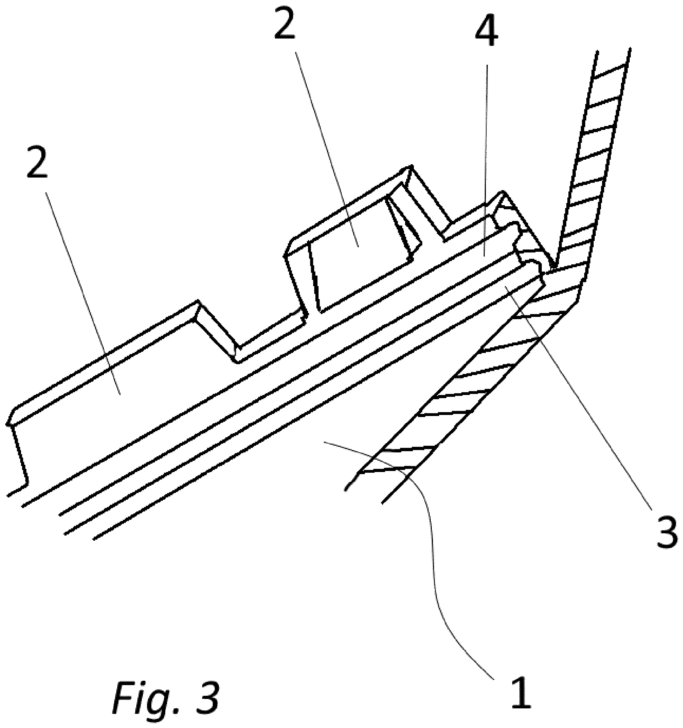

In der Fig. 3 ist ein weiteres Außenverkleidungsteil für ein Kraftfahrzeug, mit einem dünnwandigen Außenanbauteil 1, und wenigstens einem, von dem Außenanbauteil 1 abstehenden Funktionselement 2 dargestellt. Das Funktionselement 2 und das Außenanbauteil 1 sind (wie an dem teilweisen Querschnitt ersichtlich) einstückig aus einem Kunststoffmaterial ausgebildet. Die Herstellung des Außenverkleidungsteils erfolgt im Spritzguss.

Eine linienförmige Einschnürung 3 ist am Übergang von dem Außenanbauteil 1 zu dem Funktionselement 2 vorgesehen, um Einfallstellen und Abzeichnungen auf der Oberfläche des Außenanbauteils 1 aufgrund einer Masseanhäufung des Kunststoffmaterials des Außenanbauteils 1 zu vermeiden. Der Übergang befindet sich im Bereich des Winkelscheitels (Designknicks) eines gewölbten bzw. abgewinkelten Teils des Außenanbauteils 1.

Zumindest abschnittsweise und mit einem geringen Abstand zu der Einschnürung 3 ist eine annähernd parallel zu der Einschnürung 3 verlaufende Sicke 4 (alternativ eine weitere Einschnürung) in dem Funktionselement 2 vorgesehen.

In Fig. 3 ist erkennbar, dass die geringste Wandstärke des Funktionselements 2 im Bereich der weiteren Einschnürung oder im Bereich der Sicke 4 wenigstens 30%, bevorzugt wenigstens 50% geringer ist als die an diesen Bereich angrenzende Wandstärke des Funktionselements 2. Einen Wert von mehr als 85% sollte diese Wandstärke jedoch nicht unterschreiten.

Ebenfalls in Fig. 3 ersichtlich beträgt der Abstand zwischen der Sicke 4 und der Einschnürung 3 zwischen 1 mm bis 15 mm, bevorzugt zwischen 1,5 mm bis 10 mm, weiter bevorzugt zwischen 2 mm bis 8 mm.

Die hier dargestellten Funktionselemente (vgl. Fig. 3) sind eine Versteifungsrippe und ein Verbindungselement in Form eines Rastelementes mit Rasthaken.

Das Kunststoffmaterial, aus dem das Außenanbauteil und das Funktionselement gebildet sind, umfasst bevorzugt Polypropylen.

Das Außenanbauteil 1 weist eine Wandstärke im Bereich von 2,0 mm bis 4,0 mm, vorzugsweise von 2,5 mm bis 3,5 mm, bevorzugt von 2,8 mm bis 3,2 mm auf.

Das gezeigte Außenverkleidungsteil kann eine Stoßfängerverkleidung oder eine Türaußenverkleidung oder eine Heckklappenaußenverkleidung oder eine Kotflügelverkleidung oder eine Frontmaske oder eine Kühlerverkleidung oder eine Schwellerverkleidung oder ein Spoiler oder ein Diffusor sein.

## Patentansprüche

1. Außenverkleidungsteil für ein Kraftfahrzeug, mit
- einem dünnwandigen Außenanbauteil (1), und
- wenigstens einem, von dem Außenanbauteil (1) abstehenden Funktionselement (2),
wobei das Funktionselement (2) und das Außenanbauteil (1) einstückig aus einem Kunststoffmaterial ausgebildet sind und,
wobei eine linienförmige Einschnürung (3) am Übergang von dem Außenanbauteil (1) zu dem Funktionselement (2) vorgesehen ist, um Einfallstellen und Abzeichnungen auf der Oberfläche des Außenanbauteils (1) aufgrund einer Masseanhäufung des Kunststoffmaterials des Außenanbauteils (1) zu vermeiden,
**dadurch gekennzeichnet, dass**
zumindest abschnittsweise und mit einem geringen Abstand zu der Einschnürung (3) eine annähernd parallel zu der Einschnürung (3) verlaufende Sicke (4) oder eine weitere Einschnürung in dem Funktionselement (2) vorgesehen ist.

2. Außenverkleidungsteil nach Anspruch 1, **dadurch gekennzeichnet, dass** die geringste Wandstärke (T) des Funktionselements (2) im Bereich der weiteren Einschnürung oder im Bereich der Sicke (4) wenigstens 30% geringer ist als die an diesen Bereich angrenzende Wandstärke des Funktionselements (2).

3. Außenverkleidungsteil nach Anspruch 2, **dadurch gekennzeichnet, dass** die geringste Wandstärke (T) des Funktionselements (2) im Bereich der weiteren Einschnürung oder im Bereich der Sicke (4) wenigstens 50% geringer ist als die an diesen Bereich angrenzende Wandstärke des Funktionselements (2).

4. Außenverkleidungsteil nach einem der vorstehenden Ansprüche, **dadurch gekennzeichnet, dass** das Funktionselement (2) eine Versteifungsrippe oder ein Flansch oder ein Verbindungselement, insbesondere ein Rastelement ist.

5. Außenverkleidungsteil nach einem der vorstehenden Ansprüche, **dadurch gekennzeichnet, dass** der Abstand (A) zwischen der weiteren Einschnürung und der Einschnürung (3) oder zwischen der Sicke (4) und der Einschnürung (3) zwischen 1 mm bis 15 mm, bevorzugt zwischen 1,5 mm bis 10 mm, weiter bevorzugt zwischen 2 mm bis 8 mm beträgt.

6. Außenverkleidungsteil nach einem der vorstehenden Ansprüche, **dadurch gekennzeichnet, dass** das Kunststoffmaterial Polypropylen umfasst.

7. Außenverkleidungsteil nach einem der vorstehenden Ansprüche, **dadurch gekennzeichnet, dass** das Außenanbauteil (1) eine Wandstärke im Bereich von 2,0 mm bis 4,0 mm, vorzugsweise von 2,5 mm bis 3,5 mm, bevorzugt von 2,8 mm bis 3,2 mm aufweist.

8. Außenverkleidungsteil nach einem der vorstehenden Ansprüche, **dadurch gekennzeichnet, dass** das Außenverkleidungsteil eine Stoßfängerverkleidung oder eine Türau-ßenverkleidung oder eine Heckklappenaußenverkleidung oder eine Kotflügelverkleidung oder eine Frontmaske oder eine Kühlerverkleidung ist.
